(19) Europäisches Patentamt
European Patent Office
Office européen des brevets

(11) EP 3 255 712 B1

(12) **FASCICULE DE BREVET EUROPEEN**

(45) Date de publication et mention de la délivrance du brevet:
**29.07.2020 Bulletin 2020/31**

(51) Int Cl.:
***H01M 4/62*** *(2006.01)* ***H01M 4/139*** *(2010.01)*
***H01M 10/052*** *(2010.01)* ***H01M 10/0525*** *(2010.01)*
***H01M 10/054*** *(2010.01)*

(21) Numéro de dépôt: **17174366.9**

(22) Date de dépôt: **02.06.2017**

(54) **PROCEDE DE FABRICATION D'UNE ELECTRODE POUR ACCUMULATEUR FONCTIONNANT SUR LE PRINCIPE D'INSERTION ET DESINSERTION IONIQUE OU DE FORMATION D'ALLIAGE**

HERSTELLUNGSVERFAHREN EINER ELEKTRODE FÜR EINEN AKKU, DAS AUF DEM PRINZIP DER INKLUSION UND EXKLUSION VON IONEN ODER DER LEGIERUNGSBILDUNG BERUHT

METHOD FOR MANUFACTURING AN ELECTRODE FOR A BATTERY OPERATING ON THE PRINCIPLE OF ION INSERTION AND REMOVAL OR ALLOY FORMATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.06.2016 FR 1655247**

(43) Date de publication de la demande:
**13.12.2017 Bulletin 2017/50**

(73) Titulaire: **Commissariat à l'énergie atomique et aux énergies alternatives**
**75015 Paris (FR)**

(72) Inventeurs:
- **GUTEL, Thibaut**
  **38113 Veurey Voroize (FR)**
- **COLIN, Jean-François**
  **38240 Meylan (FR)**
- **MASSE, Florence**
  **38410 Saint Martin D'Uriage (FR)**
- **PORCHER, Willy**
  **38000 Grenoble (FR)**
- **REYNIER, Yvan**
  **38120 Saint Egreve (FR)**

(74) Mandataire: **Brevalex**
**95, rue d'Amsterdam**
**75378 Paris Cedex 8 (FR)**

(56) Documents cités:
**CN-A- 104 037 418 FR-A1- 2 961 634**

- **SHANMUKARAJ D ET AL: "Sacrificial salts: Compensating the initial charge irreversibility in lithium batteries", ELECTROCHEMISTRY COMMUNICATIONS, ELSEVIER, AMSTERDAM, NL, vol. 12, no. 10, octobre 2010 (2010-10), pages 1344-1347, XP027423660, ISSN: 1388-2481, DOI: 10.1016/J.ELECOM.2010.07.016 [extrait le 2010-10-01]**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

### DOMAINE TECHNIQUE

La présente invention a trait à un procédé de fabrication d'une électrode pour accumulateur fonctionnant selon le principe d'insertion et désinsertion ionique dans l'un au moins des matériaux actifs d'électrodes, tels que les accumulateurs lithium-ion ou encore selon le principe de formation d'un alliage avec l'un au moins des matériaux actifs d'électrode.

Les accumulateurs de ce type ont pour vocation d'être utilisés comme source d'énergie autonome, en particulier, dans les équipements électroniques portables (tels que les téléphones mobiles, les ordinateurs portables, l'outillage), afin de remplacer progressivement les accumulateurs nickel-cadmium (NiCd) et nickel-hydrure métallique (NiMH). Ils peuvent également servir à fournir l'alimentation en énergie nécessaire aux nouvelles microapplications, telles que les cartes à puce, les capteurs ou autres systèmes électromécaniques ainsi que pour l'électromobilité.

Du point de vue de leur fonctionnement, les accumulateurs susmentionnés fonctionnent soit selon le principe d'insertion-désinsertion ionique dans les matériaux actifs ou soit selon le principe de formation d'un alliage avec au moins l'un des matériaux actifs, tel que le lithium qui peut former un alliage avec le silicium, l'étain, l'antimoine, l'aluminium ou le germanium.

En prenant pour exemple, les accumulateurs au lithium, lors de la décharge de l'accumulateur, l'électrode négative libère du lithium sous forme ionique $Li^+$, qui migre à travers l'électrolyte conducteur ionique et vient s'incorporer dans le matériau actif de l'électrode positive, soit pour former un matériau d'insertion ou un alliage. Le passage de chaque ion $Li^+$ dans le circuit interne de l'accumulateur est exactement compensé par le passage d'un électron dans le circuit externe, générant ainsi un courant électrique.

En revanche, lors de la charge de l'accumulateur, les réactions se produisant au sein de l'accumulateur sont les réactions inverses de la décharge, à savoir que :

- l'électrode négative va incorporer du lithium dans le réseau du matériau la constituant, soit pour former un matériau d'insertion soit pour former un alliage ; et
- l'électrode positive va libérer du lithium, lequel va s'incorporer dans le matériau de l'électrode négative pour former un matériau d'insertion ou un alliage.

Lors du premier cycle de charge de l'accumulateur, quand le matériau actif de l'électrode négative est porté à un potentiel d'insertion du lithium ou de formation d'alliage de lithium, une partie du lithium va réagir avec l'électrolyte à la surface des grains de matériau actif de l'électrode négative pour former une couche de passivation à sa surface. La formation de cette couche de passivation consomme une quantité d'ions lithium non négligeable, ce qui se matérialise par une perte irréversible de capacité de l'accumulateur (cette perte étant qualifiée de capacité irréversible et pouvant être évaluée de l'ordre de 5 à 20% de la capacité totale initiale de l'électrode positive), du fait que les ions lithium ayant réagi ne sont plus disponibles pour les cycles ultérieurs de charge/décharge. D'autres réactions de surface peuvent également se produire avec consommation du lithium, comme la réduction de la couche d'oxyde située à la surface du matériau actif, notamment lorsque celui-ci est du silicium, pour former des composés du type $Li_4SiO_4$. Qui plus est, une partie des réactions d'insertion dans les matériaux d'insertion peuvent être irréversibles, ce qui consomme du lithium, qui ne sera plus disponible par la suite.

Il convient donc de minimiser, au maximum, ces pertes lors de la première charge, afin que la densité d'énergie de l'accumulateur soit la plus élevée possible.

Pour compenser ce phénomène, il peut être envisagé une source de lithium supplémentaire dans le matériau d'électrode, laquelle peut servir également de réserve d'ions pour compenser les pertes au cours de la durée de vie de l'accumulateur et ainsi l'améliorer ou pour pouvoir travailler avec un matériau d'électrode sur un domaine de capacités particulier, pour lequel la perte par cycle est, par exemple, diminuée.

Pour ce faire, il a été proposé des techniques d'introduction de lithium additionnel dans l'électrode négative ou l'électrode positive pour pallier l'inconvénient susmentionné, ces techniques pouvant être :

- des techniques de prélithiation de l'électrode négative ; ou
- des techniques de surlithiation de l'électrode positive.

Concernant les techniques de prélithiation de l'électrode négative, on peut citer :

- les techniques dites « *in situ* » consistant à déposer sur l'électrode négative du lithium métallique (c'est-à-dire au degré d'oxydation « 0 ») soit sous forme d'une feuille métallique (comme décrit dans WO 1997031401) ou soit sous forme d'une poudre de lithium métallique stabilisée par une couche protectrice (comme décrit dans Electrochemistry

Communications 13 (2011) 664-667) mélangée avec l'encre comprenant les ingrédients de l'électrode négative (à savoir, le matériau actif, les conducteurs électroniques et un liant organique), l'insertion de lithium se faisant, indépendamment de l'alternative retenue, de manière spontanée par un phénomène de corrosion ;

- les techniques dites « *ex situ* » consistant à prélithier électrochimiquement l'électrode négative, en plaçant celle-ci dans un montage comportant un bain électrolytique et une contre-électrode comprenant du lithium, ces techniques permettent de contrôler la quantité de lithium introduite dans l'électrode négative mais présentent toutefois l'inconvénient de nécessiter la mise en place d'un montage expérimental lourd.

En variante, il a été également proposé, dans l'art antérieur, des techniques de surlithiation de l'électrode positive, notamment, en ajoutant dans la composition comprenant les ingrédients constitutifs de l'électrode positive, un sel sacrificiel qui, lors de la première charge, va se décomposer et fournir la quantité nécessaire de Li pour former la couche de passivation à la surface de l'électrode négative et compenser les phénomènes de consommation irréversible du lithium.

Dans ces techniques, il est à noter que le sel sacrificiel doit, en principe, pouvoir se décomposer à un potentiel situé dans une fenêtre de potentiels compatible avec l'électrode positive lors de la première charge.

Aussi, lorsque la première charge a lieu, deux réactions électrochimiques simultanées génèrent des ions $Li^+$, que sont la désinsertion de lithium de l'électrode positive et la décomposition du sel sacrificiel. Lors de la décomposition du sel sacrificiel, il se forme notamment des sous-produits inertes, solides, liquides ou gazeux, qui seront éventuellement évacués à l'issue de l'étape de charge. En effet, on évite ainsi d'alourdir inutilement l'accumulateur par ces sous-produits, qui, en outre, pourraient gêner le fonctionnement électrochimique ultérieur de la cellule.

C'est le cas notamment, dans le document FR 2961 634, qui précise que le sel sacrificiel est introduit directement dans l'électrode positive, qui comprend ainsi le matériau actif (de 5 à 95% en masse), le conducteur électronique (de 0,1 à 30% en masse), éventuellement un liant (à une teneur inférieure à 25% en masse) et le sel sacrificiel (de 5 à 70% en masse), qui se trouve réparti, de manière aléatoire, dans l'électrode positive.

Par exemple, pour une électrode positive comprenant, comme matériau actif, du $LiMn_2O_4$ (81%), comme conducteur électronique, du noir d'acétylène (8%) et, comme sel sacrificiel, de l'azoture de lithium (11%), celle-ci est obtenue par co-broyage dans un mortier des poudres constitutives des ingrédients susmentionnés. L'évaluation électrochimique de ce co-broyage montre un plateau à 3,7 V correspondant à l'oxydation du $LiN_3$ et donc à la décomposition de celui-ci.

Toutefois, cet exemple ne met pas en jeu de liant et n'est pas représentatif du procédé de réalisation d'une électrode réelle. Les auteurs ont montré que, si ce procédé est transposé pour l'enduction d'une électrode en présence d'un liant, la décomposition du sel de lithium n'est pas optimale et, ce pour les raisons suivantes :

- la décomposition n'est pas complète, ce qui induit une utilisation du sel non optimale et une phase non conductrice, qui demeure dans l'électrode ;
- la décomposition se produit à un potentiel de décomposition supérieur au potentiel thermodynamique, ce qui induit une consommation d'énergie supplémentaire, qui peut s'accompagner de la décomposition associée non souhaitée d'autres composants de l'accumulateur, tels que l'électrolyte.

Le document CN104037418 décrit également une méthode de préparation d'une électrode pour une batterie au lithium comprenant un pré-mélange d'un agent pourvoyeur d'ions lithium et d'un additif conducteur électronique .

Aussi, au vu de ce qui précède, les auteurs de la présente invention se sont fixé pour objectif de mettre au point un procédé de fabrication d'une électrode pour accumulateur fonctionnant selon le principe d'insertion-désinsertion ionique dans l'un au moins des matériaux actifs d'électrodes, tels que les accumulateurs lithium-ion ou encore selon le principe de formation d'un alliage avec l'un au moins des matériaux actifs d'électrode, lequel procédé permettant de surmonter les inconvénients susmentionnés.

**EXPOSE DE L'INVENTION**

Ainsi, l'invention a trait à un procédé de préparation d'une électrode, par exemple, positive, pour accumulateur fonctionnant selon le principe d'insertion et désinsertion ionique et/ou selon le principe de formation d'un alliage, ladite électrode comprenant un matériau actif d'électrode comprenant les étapes suivantes :

a) une étape de préparation d'un mélange de poudres comprenant au moins une poudre d'un additif conducteur électronique et au moins une poudre d'un sel, dont un des ions est celui intervenant dans le processus d'insertion ou désinsertion ionique et/ou de formation d'un alliage, ledit sel étant, choisi parmi :

- les azotures de formule $N_3A$, avec A correspondant à un cation lithium, sodium ou potassium ; les diazotures

de formule $(N_3)_2A^1$ avec $A^1$ correspondant à un cation magnésium ou calcium ; les triazotures de formule $(N_3)_3A^2$ avec $A^2$ correspondant à un cation aluminium ;

- les sels oxocarbonés répondant à l'une des formules (I) à (IV) suivantes :

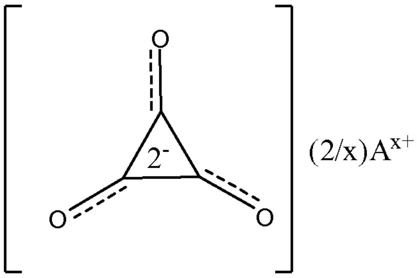

(I)

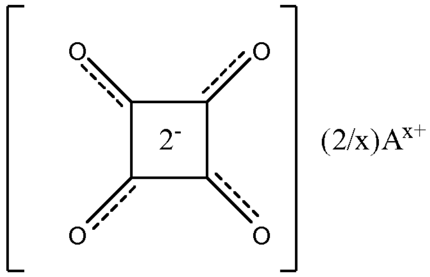

(II)

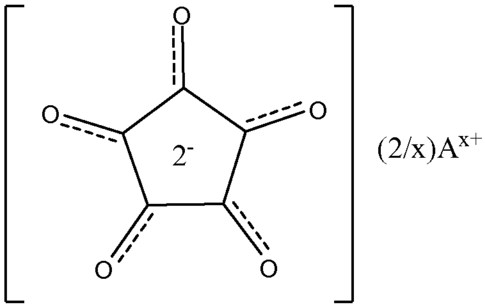

(III)

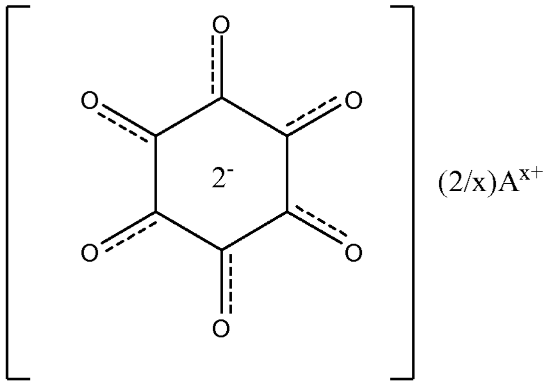

(IV)

les formules susmentionnées indiquant que deux charges négatives sont portées par deux atomes d'oxygène du cycle auxquels ils sont liés, les autres atomes d'oxygène étant liés par une double liaison au cycle, A correspondant à un cation lithium, sodium, potassium, calcium, magnésium ou aluminium et x correspondant au nombre de charges du cation ;

- les cétocarboxylates répondant aux formules (V) à (VII) suivantes :

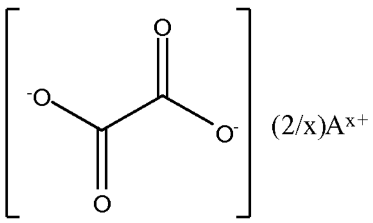

(V)

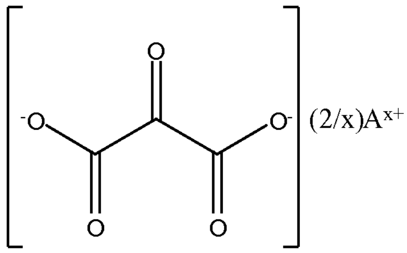

(VI)

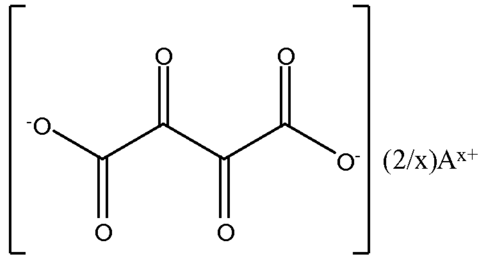

(VII)

avec A correspondant à un cation lithium, sodium, potassium, calcium, magnésium ou aluminium et x correspondant au nombre de charges du cation ;

- les hydrazides de lithium répondant aux formules (VIII) et (IX) suivantes :

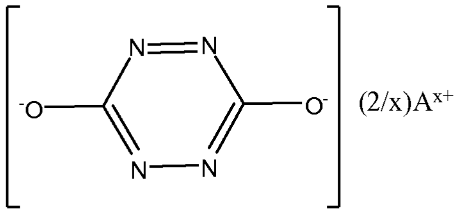

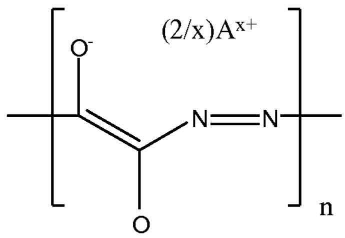

(VIII) (IX)

avec A correspondant à un cation lithium, sodium, potassium, calcium, magnésium ou aluminium, x correspondant au nombre de charges du cation et n correspondant au nombre de répétition du motif pris entre crochets, ce nombre de répétition pouvant aller de 3 à 1000 ;

b) une étape de mise en contact du mélange de poudres de l'étape a) avec une suspension comprenant un solvant et ledit matériau actif de l'électrode ;
c) une étape de mise en forme et de séchage du mélange obtenu en b), moyennant quoi il résulte l'électrode pour accumulateur mentionnée en objet.

Par matériau actif, on entend, classiquement, dans ce qui précède et ce qui suit, lorsque l'accumulateur fonctionne selon le principe de l'insertion et désinsertion ionique, le matériau qui est directement impliqué dans les réactions d'insertion et de désinsertion des ions dans les matériaux actifs d'électrode lors des processus de charge et de décharge, en ce sens qu'il est apte à accueillir à insérer et désinsérer des ions dans son réseau, ces ions pouvant être des ions lithium, lorsque l'accumulateur est un accumulateur lithium-ion, des ions sodium, lorsque l'accumulateur est un accumulateur sodium-ion, des ions potassium, lorsque l'accumulateur est un accumulateur potassium-ion ou des ions magnésium, lorsque l'accumulateur est un accumulateur magnésium-ion.

Par matériau actif, on entend, classiquement, dans ce qui précède et ce qui suit, lorsque l'accumulateur fonctionne selon le principe de formation d'alliage, un matériau qui est impliqué dans les réactions d'alliage ou de désalliage lors des processus de charge et de décharge.

Les auteurs de l'invention ont découvert, de manière surprenante qu'en procédant à une étape de préparation du mélange de poudres de l'étape a) avec les ingrédients spécifiques, que sont l'additif conducteur électronique et le sel, l'on obtient une amélioration des propriétés de l'électrode, par rapport à une électrode obtenue par un mélange direct des ingrédients constitutifs de l'électrode sans passer par cette étape préalable caractéristique de l'invention. Plus précisément, l'amélioration des propriétés passe par :

- une amélioration du rendement de décomposition du sel lors de l'utilisation d'une électrode dans un accumulateur, ce qui ne laissera pas subsister de phase non conductrice et inactive électrochimiquement dans l'électrode ;
- une réduction de la polarisation, c'est-à-dire du potentiel auquel intervient la décomposition du sel, ce qui évite une consommation d'énergie trop importante et qui peut générer une décomposition des autres composants de l'accumulateur dans lequel est incorporée l'électrode, tels que l'électrolyte ;
- la possibilité d'ajuster la distribution de tailles de grains du mélange de poudres en vue de simplifier sa mise en

contact ultérieure comme définie à l'étape b) ;

- la possibilité, une fois l'électrode mise en œuvre dans un accumulateur, de compenser la consommation irréversible de l'ion entrant dans le processus d'insertion-désinsertion ou d'alliage-désalliage lors du premier cycle ou des cycles suivants procurant ainsi un gain de capacité lors du cyclage ultérieur.

Qui plus est, pour des cas particuliers où le sel est non soluble, typiquement dans de la N-méthyl-pyrrolidone, classiquement employée dans la réalisation des encres pour électrode, le sel, qui est isolant électroniquement et qui est en contact intime avec le conducteur électronique va donc être plus efficacement décomposé. Cette structuration particulière du sel avec l'additif conducteur électronique est en effet conservée lors de la mise en œuvre de l'électrode intégrant le mélange de poudres. Pour les cas de formulations où le sel est soluble, typiquement avec de l'eau, le sel et l'additif conducteur électronique étant ajoutés en même temps, ceci limite le nombre de pesée et trémie d'alimentation lors de la mise en œuvre du procédé.

En outre, le sel incorporé dans l'électrode via son procédé de fabrication peut être qualifié de « sel sacrificiel ». En effet, lors de la première charge de l'accumulateur, dans laquelle l'électrode est incorporée, ce sel peut se décomposer, ce qui se traduit par une libération d'ions, qui vont compenser les réactions de consommation irréversible des ions notamment au cours de la formation de la couche de passivation à la surface de l'autre électrode de signe opposée, lors des phénomènes d'intercalation ou de formation d'alliage en partie irréversible ou de réactions à la surface des électrodes.

Aussi, les ions nécessaires pour la formation de la couche de passivation ne sont pas issus du matériau actif de l'électrode obtenue par le procédé de l'invention mais du sel sacrificiel, ou à tout le moins, la perte en ions pour la formation de cette couche est compensée par la présence du sel sacrificiel. Les ions du matériau actif de l'électrode, par exemple, positive, ne sont donc pas perdus pour la formation de cette couche lors de la première charge et donc la perte de capacité de l'accumulateur s'en trouve amoindrie voire nulle. Les réactions irréversibles de l'électrode, par exemple, négative sont compensées par une réaction irréversible à l'électrode, par exemple, positive, ce qui est plus efficace en termes de densité pour l'accumulateur.

L'étape de préparation d'un mélange de poudres comprenant au moins une poudre d'un additif conducteur électronique et au moins une poudre d'un sel peut être réalisée de différentes manières.

Selon un premier mode de réalisation, l'étape de préparation a) peut consister à co-broyer, en milieu solide, au moins une poudre d'un additif conducteur électronique et au moins une poudre d'un sel, ce co-broyage étant réalisé uniquement en phase solide, c'est-à-dire sans le recours à une phase liquide, telle que, par exemple, un ou plusieurs solvants organiques.

Ce co-broyage peut classiquement être mis en œuvre dans un bol, par exemple, un bol en agate, dans lequel sont placées des billes de broyage et les poudres susmentionnées, pour réduire la taille des poudres et obtenir un mélange intime entre la poudre d'un additif conducteur électronique et la poudre d'un sel.

En variante, le co-broyage peut être réalisé en présence d'une phase liquide, qui peut être une solution aqueuse ou une solution organique, ce qui nécessitera à l'issue du co-broyage, une opération de séchage, par exemple, par un procédé d'atomisation, de lyophilisation ou d'évaporation classique.

Selon un deuxième mode de réalisation, l'étape a) peut consister à mettre en œuvre les opérations suivantes :

i) une opération de mise en contact d'au moins une poudre d'un additif conducteur électronique et d'au moins une poudre d'un sel, dans une solution, qui peut être une solution aqueuse basique, pour faciliter au moins la dissolution du sel ;

ii) une opération de mélange de la solution obtenue en i), par exemple, par ultrasons ; et

iii) une opération de séchage de la solution, jusqu'à obtention du mélange de poudres.

La solution aqueuse basique peut être un mélange eau/alcool comprenant, comme base, une base hydroxyde dont le contre-ion est identique à l'ion du sel, intervenant dans le processus d'insertion et désinsertion ionique de l'accumulateur ou de formation d'alliage, ce qui permet d'éviter une pollution du mélange de poudres par des ions parasites. Par ailleurs, le contrôle de pH peut permettre d'éviter l'hydrolyse du sel.

Au même titre que pour le premier mode de réalisation, ce mode de réalisation permet d'obtenir un mélange intime entre la poudre d'un additif conducteur électronique et la poudre d'un sel.

A titre d'exemple, la solution aqueuse basique peut être un mélange eau/éthanol comprenant une base $LiOH$, lorsque le sel est un sel de lithium.

En outre, il peut être ajouté au mélange de l'opération i), un polymère afin d'améliorer la dispersion du mélange.

Ce polymère peut être typiquement un liant d'électrode telle qu'une carboxyméthylcellulose, un acide polyacrylique ou du polyfluorure de vinylidène (PVDF). La masse moléculaire de ce polymère peut être celle d'un liant classiquement employé dans le domaine des accumulateurs, soit une masse moléculaire moyenne compris entre 100,000 et 3,000,000 g/mol mais moins également (entre 1,000 et 100,000 g/mol) si on veut optimiser la dispersion, en

terme de qualité et de quantité de polymère introduite dans le mélange de poudres.

Quel que soit le mode de réalisation retenu pour l'étape a), le sel peut être tous les sels comprenant un anion et un contre-ion alcalin (lithium, par exemple, lorsque l'accumulateur est un accumulateur au lithium ; sodium, par exemple, lorsque l'accumulateur est un accumulateur au sodium ; potassium, par exemple, lorsque l'accumulateur est un accumulateur au potassium), un contre-ion alcalino-terreux (magnésium, par exemple, lorsque l'accumulateur au magnésium ; calcium, par exemple, lorsque l'accumulateur est un accumulateur au calcium) ou un contre-ion aluminium, lorsque l'accumulateur est un accumulateur à l'aluminium, ces sels pouvant être décomposés électrochimiquement en libérant l'ion correspondant (à savoir, l'ion alcalin ou alcalino-terreux susmentionné, l'ion aluminium) et un sous-produit inerte, de préférence, gazeux.

Les sels appartiennent aux catégories suivantes :

- les azotures de formule $N_3A$, avec A correspondant à un cation lithium, sodium ou potassium ; les diazotures de formule $(N_3)_2A^1$ avec $A^1$ correspondant à un cation magnésium ou calcium ; les triazotures de formule $(N_3)_3A^2$ avec $A^2$ correspondant à un cation aluminium ;
- les sels oxocarbonés, tels que ceux répondant à l'une des formules (I) à (IV) suivantes :

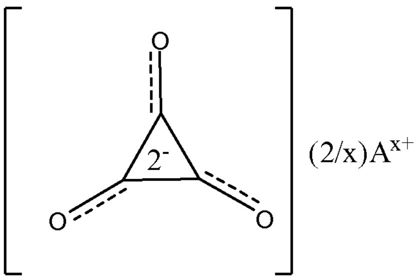

(I)

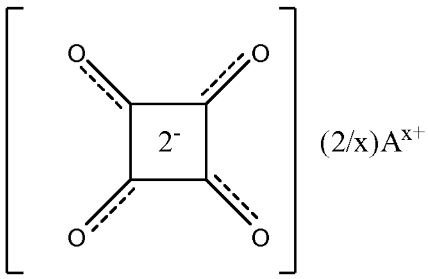

(II)

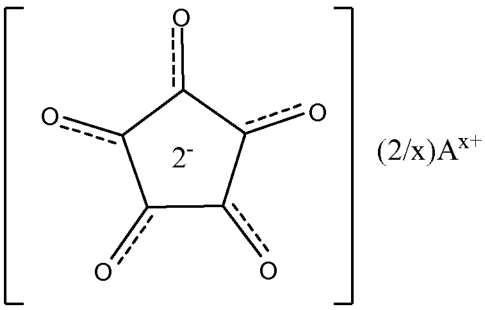

(III)

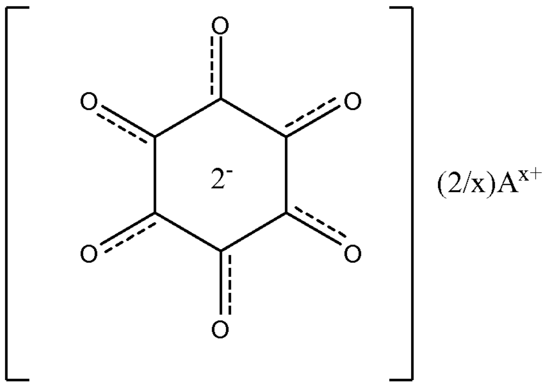

(IV)

  les formules susmentionnées indiquant que deux charges négatives sont portées par deux atomes d'oxygène du cycle auxquels ils sont liés, les autres atomes d'oxygène étant liés par une double liaison au cycle, A correspondant à un cation lithium, sodium, potassium, calcium, magnésium ou aluminium et x correspondant au nombre de charges du cation ;
- les cétocarboxylates, tels que ceux répondant aux formules (V) à (VII) suivantes :

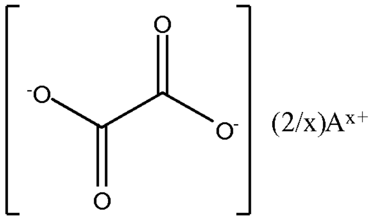

(V)

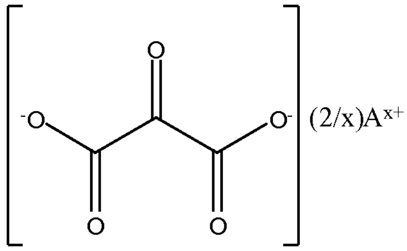

(VI)

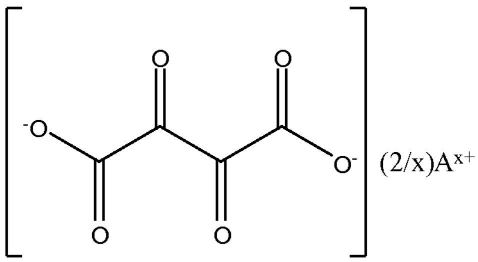

(VII)

avec A correspondant à un cation lithium, sodium, potassium, calcium, magnésium ou aluminium et x correspondant au nombre de charges du cation ;

- les hydrazides de lithium, tels que ceux répondant aux formules (VIII) et (IX) suivantes :

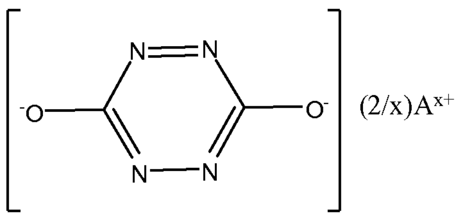

(VIII)

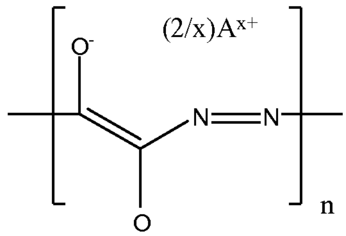

(IX)

avec A correspondant à un cation lithium, sodium, potassium, calcium, magnésium ou aluminium, x correspondant au nombre de charges du cation et n correspondant au nombre de répétition du motif pris entre crochets, ce nombre de répétition pouvant aller de 3 à 1000.

De manière plus spécifique, on peut mentionner comme exemples de sels de lithium :

- l'azoture de lithium de formule $LiN_3$ ;
- le squarate de lithium de formule (X) suivante :

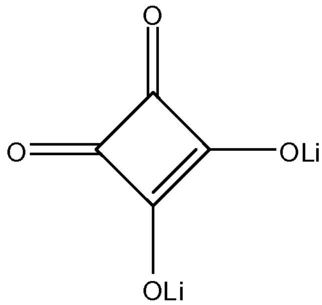

(X)

- l'oxalate de lithium de formule (XI) suivante :

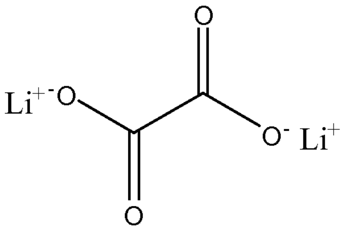

(XI)

Le ou les sels utilisés dans le cadre de l'étape a) est (sont), de préférence, non soluble(s) dans le solvant utilisé pour la préparation de l'électrode, à savoir le solvant utilisé dans le cadre de l'étape b).

L'additif conducteur électronique peut être, de préférence, un matériau carboné, tel qu'un matériau comprenant du carbone à l'état élémentaire et, de préférence, sous forme divisée, tel que des particules sphériques, des plaquettes ou des fibres.

On peut citer, comme matériau carboné, du graphite ; des billes de mésocarbone ; des fibres de carbone ; du noir de carbone, tel que du noir d'acétylène, du noir tunnel, du noir de fourneau, du noir de lampe, du noir d'anthracène, du noir de charbon, du noir de gaz, du noir thermique; du graphène ; des nanotubes de carbone ; et des mélanges de ceux-ci.

D'un point de vue structural, dans le mélange de poudres, le sel peut être sur tout ou partie de l'additif conducteur électronique. En particulier, lorsque le mélange de poudres comprend au moins deux additifs conducteurs électroniques, le sel peut se trouver sur un ou plus desdits au moins deux additifs conducteurs électroniques.

Le ratio entre le sel et l'additif conducteur électronique peut être compris entre 0,1 et 10.

Le sel peut être présent en une teneur allant de 0,1 à 50 % massique par rapport à la masse totale des ingrédients de l'électrode (à savoir, le matériau actif, le ou les additifs conducteurs électroniques, le sel et éventuellement le liant).

L'additif conducteur électronique peut être présent en une teneur allant de 0,1 à 20% massique par rapport à la masse totale des ingrédients de l'électrode (à savoir, le matériau actif, le ou les additifs conducteurs électroniques, le sel et éventuellement le liant).

Une fois l'étape a) réalisée, le mélange de poudres obtenu est mis en contact avec une suspension comprenant un solvant organique, un matériau actif de l'électrode et, éventuellement, un liant.

Concernant le matériau actif, lorsque l'accumulateur fonctionne selon le principe de l'insertion et la désinsertion ionique, il s'agit d'un matériau d'insertion ionique et ce, de manière réversible pour que les processus de charge et de décharge puissent avoir lieu lors du fonctionnement de l'accumulateur.

Lorsque l'accumulateur est un accumulateur du type lithium-ion, le matériau actif de l'électrode peut être un matériau du type oxyde lithié comprenant au moins un élément métallique de transition, du type phosphate lithié comprenant au moins un élément métallique de transition, du type silicate lithié comprenant au moins un élément métallique de transition ou du type borate lithié comprenant au moins un élément métallique de transition.

Comme exemples de composés oxydes lithiés comprenant au moins un élément métallique de transition, on peut citer des oxydes simples ou des oxydes mixtes (c'est-à-dire des oxydes comprenant plusieurs éléments métalliques de transition distincts) comprenant au moins un élément métallique de transition, tels que des oxydes comprenant du nickel, du cobalt, du manganèse et/ou de l'aluminium (ces oxydes pouvant être des oxydes mixtes).

Plus spécifiquement, comme oxydes mixtes comprenant du nickel, du cobalt, du manganèse et/ou de l'aluminium, on peut citer les composés de formule (XII) suivante :

$$LiM^2O_2 \qquad (XII)$$

dans laquelle $M^2$ est un élément choisi parmi Ni, Co, Mn, Al et les mélanges de ceux-ci.

A titre d'exemples de tels oxydes, on peut citer les oxydes lithiés $LiCoO_2$, $LiNiO_2$ et les oxydes mixtes $Li(Ni,Co,Mn)O_2$ (tel que $Li(Ni_{1/3}Mn_{1/3}Co_{1/3})O_2$ ou $Li(Ni_{0,6}Mn_{0,2}Co_{0,2})O_2$ (connu également sous la dénomination NMC), $Li(Ni,Co,Al)O_2$ (tel que $Li(Ni_{0,8}Co_{0,15}Al_{0,05})O_2$ connu également sous la dénomination NCA) ou $Li(Ni,Co,Mn,Al)O_2$, les oxydes dits riches en lithium $Li_{1+x}(Ni,Co,Mn)O_2$, x étant supérieur à 0.

Comme exemples de composés phosphates lithiés comprenant au moins un élément métallique de transition, on peut citer les composés de formule $LiM^1PO_4$, dans laquelle $M^1$ est choisi parmi Fe, Mn, Ni, Co et les mélanges de ceux-ci, tel que $LiFePO_4$.

Comme exemples de composés silicates lithiés comprenant au moins un élément métallique de transition, on peut citer les composés de formule $Li_2M^1SiO_4$, dans laquelle $M^1$ est choisi parmi Fe, Mn, Co et les mélanges de ceux-ci.

Comme exemples de composés borates lithiés comprenant au moins un élément métallique de transition, on peut citer les composés de formule $LiM^1BO_3$, dans laquelle $M^1$ est choisi parmi Fe, Mn, Co et les mélanges de ceux-ci.

Lorsque l'accumulateur est un accumulateur du type sodium-ion, le matériau actif de l'électrode peut être :

- un matériau du type oxyde sodié comprenant au moins un élément métallique de transition ;
- un matériau du type phosphate ou sulfate sodié comprenant au moins un élément métallique de transition ;
- un matériau du type fluorure sodié ; ou
- un matériau du type sulfure comprenant au moins un élément métallique de transition.

Comme exemples de composés oxydes sodiés comprenant au moins un élément métallique de transition, on peut citer des oxydes simples ou des oxydes mixtes (c'est-à-dire des oxydes comprenant plusieurs éléments métalliques de transition distincts) comprenant au moins un élément métallique de transition, tels que des oxydes comprenant du nickel, du cobalt, du manganèse, du chrome, du titane, du fer et/ou de l'aluminium (ces oxydes pouvant être des oxydes mixtes).

Plus spécifiquement, comme oxydes mixtes comprenant du nickel, du cobalt, du manganèse et/ou de l'aluminium, on peut citer les composés de formule (XIII) suivante :

$$NaM^2O_2 \qquad (XIII)$$

dans laquelle $M^2$ est un élément choisi parmi Ni, Co, Mn, Al et les mélanges de ceux-ci.

A titre d'exemples de tels oxydes, on peut citer les oxydes sodiés $NaCoO_2$, $NaNiO_2$ et les oxydes mixtes $Na(Ni,Co,Mn)O_2$ (tel que $Na(Ni_{1/3}Mn_{1/3}Co_{1/3})O_2$), $Na(Ni,Co,Al)O_2$ (tel que $Na(Ni_{0,8}Co_{0,15}Al_{0,05})O_2$) ou $Na(Ni,Co,Mn,Al)O_2$.

Comme exemples de composés phosphates sodiés comprenant au moins un élément métallique de transition, on peut citer les composés de formule $NaM^1PO_4$, $Na_3M^1{}_2(PO_4)_3$, $Na_4M^1{}_3(PO_4)_2P_2O_7$, où $M^1$ est choisi parmi Fe, Mn, Ni, Ti, V, Mo, Co et les mélanges de ceux-ci, tel que $NaFePO_4$.

Le matériau à base de sodium peut être, également, choisi parmi :

- les fluorophosphates de sodium, tels que :

  *les fluorophosphates de formule $Na_2XPO_4F$, dans laquelle X est un élément choisi parmi Fe, Mn, Ni, Ti, V, Mo, Co et les mélanges de ceux-ci ;
  *les fluorophosphates de formule $Na_3X_2(PO_4)_2F_3$, dans laquelle X est un élément choisi parmi Fe, Mn, Ni, Ti, V, Mo Co et les mélanges de ceux-ci (ces composés étant également désignés par l'abréviation NVPF, lorsque X correspond au vanadium) ;

- les fluorosulfates de sodium de formule $NaT'SO_4F$, dans laquelle T' est un élément choisi parmi Fe, Mn, Co, Ni et les mélanges de ceux-ci.

Comme exemples de composés fluorures sodiés, on peut citer $NaFeF_3$, $NaMnF_3$ et $NaNiF_3$.

Enfin, comme exemples de composés sulfures, on peut citer $Ni_3S_2$, $FeS_2$ and $TiS_2$.

Lorsque l'accumulateur est un accumulateur du type magnésium-ion, un matériau actif de l'électrode peut être $MOS_6$.

Lorsque l'accumulateur est un accumulateur potassium-ion, les matériaux actifs de l'électrode peuvent être des matériaux similaires à ceux des accumulateurs lithium-ion susmentionnés, si ce n'est que Li est remplacé par K.

Comme solvant entrant dans la constitution de la suspension, on peut mentionner, de préférence, les solvants organiques, tels que les solvants polaires aprotiques, comme les solvants pyrrolidones, tel que la N-méthyl-2-pyrrolidone (NMP) ou les solvants aqueux, comme l'eau. De préférence encore, le solvant est un solvant organique, dans lequel le ou les sels utilisés susmentionnés ne sont pas solubles. Ceci interdit, donc, la redispersion du sel, qui reste bien au contact de l'additif conducteur, comme cela est visé par l'étape de pré-mélange a).

La suspension peut comprendre, en outre, un liant, et plus spécifiquement un liant polymérique, ce liant devant être, classiquement, stable électrochimiquement dans la fenêtre de potentiels balayés par l'électrode, qu'elle intègre par rapport à $Li^+/Li$, ce liant pouvant être soluble :

- dans des solvants organiques, tels que le polyfluorure de vinylidène ;
- dans des solvants aqueux, tels qu'une carboxyméthylcellulose (connue sous l'abréviation CMC), un acide polyacrylique ou un polyacrylate (connu sous l'abréviation PAA), un caoutchouc styrène-butadiène (connu sous l'abréviation SBR) ou encore un latex acrylique.

Enfin, la suspension peut comprendre, en outre, un additif conducteur électronique en sus de celui utilisé dans l'étape a), cet additif conducteur électronique pouvant être identique ou différent de celui utilisé dans l'étape a). Cet additif peut être, par exemple, un additif sous forme de fibres de carbone, telles que des fibres de carbone obtenues en phase vapeur.

D'un point de vue pratique, l'étape b) de mise en contact peut être réalisée selon différentes variantes.

En particulier, elle peut être réalisée par la mise en œuvre des étapes suivantes :

i) une opération d'ajout du mélange de poudres obtenu en a) dans un solvant, de préférence, un solvant organique, lequel est éventuellement, en mélange avec un liant polymérique, tel que du PVDF ;
ii) une opération d'ajout, à la dispersion résultant de i), du matériau actif.

Outre l'ajout du mélange de poudres, l'opération i) peut comprendre l'ajout d'un additif conducteur électronique identique ou différent de celui utilisé à l'étape a), cet additif pouvant être des fibres de carbone, telles que des fibres obtenues en phase vapeur.

Après l'opération i) et après l'opération ii), les mélanges résultant de ces opérations peuvent être soumis à une agitation, afin d'obtenir une bonne dispersion des produits ajoutés lors de ces opérations.

A l'issue de l'étape b), le procédé comporte une étape de mise en forme et de séchage du mélange obtenu en b), moyennant quoi il résulte l'électrode de l'invention, cette étape de séchage ayant pour objectif l'élimination du solvant utilisé dans l'étape b).

Cette étape de mise en forme peut être effectuée, par exemple, par enduction, par extrusion ou par impression par jet d'encre sur un substrat, qui peut remplir ultérieurement le rôle de substrat collecteur de courant.

A l'issue du procédé, l'électrode peut se présenter, d'un point de vue structural, sous forme d'un matériau composite comprenant une matrice généralement en liant(s) polymérique(s) au sein de laquelle sont dispersées des charges constituées par le matériau actif et le ou additifs conducteurs de l'électricité, ledit matériau composite pouvant être déposé sur un collecteur de courant.

Une fois l'électrode obtenue par le procédé de l'invention, elle est destinée à être assemblée avec une électrode de polarité opposée (à savoir une électrode positive lorsque l'électrode obtenue par le procédé de l'invention est une électrode négative ou une électrode négative, lorsque l'électrode obtenue par le procédé de l'invention est une électrode positive) et un l'électrolyte de sorte à former la cellule électrochimique de l'accumulateur.

On précise que, par électrode positive, on entend, classiquement, dans ce qui précède et ce qui suit, l'électrode qui fait office de cathode, quand le générateur débite du courant (c'est-à-dire lorsqu'il est en processus de décharge) et qui fait office d'anode lorsque le générateur est en processus de charge.

On précise que, par électrode négative, on entend, classiquement, dans ce qui précède et ce qui suit, l'électrode qui fait office d'anode, quand le générateur débite du courant (c'est-à-dire lorsqu'il est en processus de décharge) et qui fait office de cathode, lorsque le générateur est en processus de charge.

Dans le cas où l'électrode préparée selon le procédé de l'invention comprend un matériau actif de ceux listés ci-dessus, elle peut être une électrode positive auquel cas elle sera assemblée avec une électrode négative.

L'électrode négative comprend, classiquement, comme matériau actif d'électrode, un matériau apte à insérer, de manière réversible, du lithium ou à former un alliage avec le lithium (lorsque l'accumulateur est un accumulateur au lithium), du sodium (lorsque l'accumulateur est un accumulateur au sodium), du potassium (lorsque l'accumulateur est un accumulateur au potassium) ou du magnésium (lorsque l'accumulateur est un accumulateur au magnésium).

En particulier, pour un accumulateur au lithium, le matériau actif d'électrode négative peut être :

- un matériau carboné, tel que du carbone dur (connu sous l'appellation anglo-saxonne « hard carbon »), du graphite naturel ou du graphite artificiel ;
- du lithium métallique ou un matériau apte à former un alliage avec le lithium, tel que le silicium, l'étain ; ou
- un oxyde mixte de lithium, tel que $Li_4Ti_5O_{12}$ ou $LiTiO_2$.

En outre, au même titre que pour l'électrode positive, notamment lorsqu'elle n'est pas en lithium métallique, l'électrode négative peut comprendre un liant polymérique, tel que du polyfluorure de vinylidène (PVDF), un mélange carboxyméthylcellulose avec un latex du type styrène et/ou acrylique ainsi que un ou plusieurs additifs conducteurs de l'électricité, qui peuvent être des matériaux carbonés, comme du noir de carbone. Qui plus est, au même titre que pour l'électrode positive, l'électrode négative peut se présenter, d'un point de vue structural, comme un matériau composite comprenant une matrice en liant(s) polymérique(s) au sein de laquelle sont dispersées des charges constituées par le matériau actif (se présentant, par exemple, sous forme particulaire) et éventuellement le ou les additifs conducteurs de l'électricité, ledit matériau composite pouvant être déposé sur un collecteur de courant.

L'électrolyte, disposé entre l'électrode positive et l'électrode négative, est quant à lui un électrolyte conducteur d'ions lithium (lorsque l'accumulateur est un accumulateur au lithium), d'ions sodium (lorsque l'accumulateur est un accumulateur au sodium), d'ions potassium (lorsque l'accumulateur est un accumulateur au potassium), d'ions magnésium (lorsque l'accumulateur est un accumulateur au magnésium), d'ions calcium (lorsque l'accumulateur est un accumulateur au calcium) ou d'ions aluminium (lorsque l'accumulateur est un accumulateur à l'aluminium).

En particulier, lorsque l'accumulateur est un accumulateur lithium-ion, l'électrolyte peut être :

- un électrolyte liquide comprenant un sel de lithium dissous dans au moins un solvant organique, tel qu'un solvant apolaire aprotique ;
- un liquide ionique ; ou
- un électrolyte solide polymère ou céramique.

A titre d'exemples de sel de lithium, on peut citer $LiClO_4$, $LiAsF_6$, $LiPF_6$, $LiBF_4$, $LiRfSO_3$, $LiCH_3SO_3$, $LiN(RfSO_2)_2$, Rf étant choisi parmi F ou un groupe perfluoroalkyle comportant de 1 à 8 atomes de carbone, du trifluorométhanesulfonylimidure de lithium (connu sous l'abréviation LiTFSI), du bis(oxalato)borate de lithium (connu sous l'abréviation LiBOB), du bis(perfluoréthylsulfonyl)imidure de lithium (également connu sous l'abréviation LiBETI), du fluoroalkylphosphate de lithium (connu sous l'abréviation LiFAP).

A titre d'exemples de solvants organiques susceptibles d'entrer dans la constitution de l'électrolyte susmentionné, on peut citer les solvants carbonates, tels que les solvants carbonates cycliques, les solvants carbonates linéaires et les mélanges de ceux-ci.

A titre d'exemples de solvants carbonates cycliques, on peut citer le carbonate d'éthylène (symbolisé par l'abréviation EC), le carbone de propylène (symbolisé par l'abréviation PC).

A titre d'exemples de solvants carbonates linéaires, on peut citer le carbonate de diméthyle ou le carbonate de diéthyle (symbolisé par l'abréviation DEC), le carbonate de diméthyle (symbolisé par l'abréviation DMC), le carbonate d'éthylméthyle (symbolisé par l'abréviation EMC).

En outre, l'électrolyte peut être amené à imbiber un élément séparateur, par un élément séparateur polymérique poreux, disposé entre les deux électrodes de l'accumulateur.

D'autres caractéristiques et avantages de l'invention apparaîtront du complément de description qui suit et qui se rapporte à des modes de réalisation particuliers.

Bien entendu, ce complément de description n'est donné qu'à titre d'illustration de l'invention et n'en constitue en aucun cas une limitation.

## BRÈVE DESCRIPTION DES DESSINS

La figure 1 est un graphique illustrant l'évolution du potentiel E (en V) en fonction de la capacité spécifique C (en mAh/g) avec les courbes a à f faisant référence, respectivement, au premier cycle de la pile bouton avec l'électrode de l'exemple comparatif 1, au deuxième cycle de la pile bouton avec l'électrode comparatif 1, au premier cycle de la pile bouton avec l'électrode de l'exemple 1, au deuxième cycle de la pile bouton avec l'électrode de l'exemple 1, au premier cycle de la pile bouton avec l'électrode de l'exemple 2 et au deuxième cycle de la pile bouton avec l'électrode de l'exemple 2.

La figure 2 illustre l'évolution du potentiel E (en V) en fonction de la capacité spécifique C (en mAh/g) avec les courbes a à d faisant référence, respectivement, au premier cycle de la pile bouton avec l'électrode de l'exemple comparatif 2, au deuxième cycle de la pile bouton avec l'électrode comparatif 2, au premier cycle de la pile bouton

avec l'électrode de l'exemple 5 et au deuxième cycle de la pile bouton avec l'électrode de l'exemple 5.

## EXPOSÉ DÉTAILLÉ DE MODES DE RÉALISATION PARTICULIERS

### EXEMPLE COMPARATIF 1

Le présent exemple illustre la préparation d'une électrode selon des modalités non conformes à l'invention.

Dans un premier temps, il est préparé une poudre de sel sacrificiel, qui est du squarate de lithium, de formule (X) suivante :

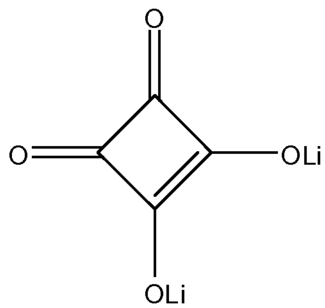

(X)

Plus précisément, le squarate de lithium est préparé par réaction en quantité stoechiométrique de l'acide squarique avec du carbonate de lithium en milieu aqueux. Le milieu réactionnel est ensuite évaporé à l'évaporateur rotatif, moyennant quoi il résulte une poudre blanche avec un rendement quantitatif. Avant utilisation, cette poudre est séchée à 50°C, afin de s'assurer de l'élimination de toutes traces d'eau.

La poudre de squarate de lithium obtenue (5% en masse) pesée sous sorbonne est introduite dans un mélange comprenant un liant PVDF (4,5% en masse) et de la N-méthyl-2-pyrrolidone, en tant que solvant. De manière concomitante, sont ajoutés des additifs conducteurs électroniques (5% en masse de carbone SuperP et de fibres de carbone obtenues en phase vapeur VGCF). Le mélange résultant est ensuite agité, en vue d'obtenir une bonne dispersion.

Ensuite, le matériau actif $LiFePO_4$ (85,5% en masse) est ajouté au mélange précédent puis est dispersé.

Le mélange final est ensuite déposé par enduction et séché.

### EXEMPLE 1

Le présent exemple illustre la préparation d'une électrode selon des modalités conformes au procédé de l'invention impliquant notamment une étape de co-broyage d'une poudre de conducteur électronique, qui est du noir de carbone et d'une poudre de sel sacrificiel, qui est du squarate de lithium, de formule (X) suivante :

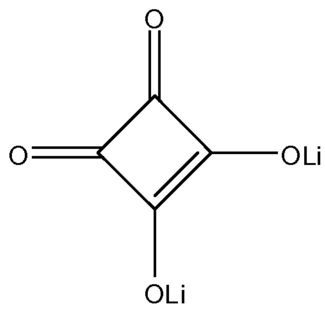

(X)

Le squarate de lithium est préparé selon un protocole opératoire identique à celui de l'exemple comparatif 1.

La poudre de squarate de lithium obtenue (2 g) (5% massique) est mélangée avec du carbone Super P (1 g) (2,5% massique) et le mélange résultant est broyé dans un bol en agate de 50 mL avec 2 billes de 1 cm de diamètre

pendant 4 heures.

Le mélange composite résultant (7,5% massique) est ajouté, après pesée sous sorbonne et sous agitation, en même temps que des fibres de carbone VGCF (2,5% massique) (à savoir, des fibres de carbone obtenues en phase vapeur), dans un mélange préalablement préparé comprenant un liant organique (du polyfluorure de vinylidène) (4,5% en masse) et un solvant (du N-méthylpyrrolidone).

Ensuite, le matériau actif $LiFePO_4$ (85,5% massique) est ajouté au mélange précédent puis est dispersé.

Le mélange final est ensuite déposé par enduction et séché.

EXEMPLE 2

Le présent exemple illustre la préparation d'une électrode selon des modalités conformes au procédé de l'invention impliquant notamment une étape de préparation du mélange composite par dispersion des ingrédients dans une solution suivie d'un séchage.

Plus précisément, dans cet exemple, le squarate de lithium est également préparé par réaction en quantité stœchiométrique de l'acide squarique avec du carbonate de lithium en milieu aqueux. Le milieu réactionnel est ensuite évaporé à l'évaporateur rotatif, moyennant quoi il résulte une poudre blanche avec un rendement quantitatif.

La poudre de squarate de lithium obtenue (2 g) est ensuite dissoute dans 50 mL d'un mélange eau/éthanol (50/50) comprenant 50 mg de LiOH. Au mélange résultant est ajouté 1 g de carbone Super P.

Le mélange final est traité avec une sonde à ultrasons pendant 3*5 minutes puis évaporé à l'évaporateur rotatif, moyennant quoi il résulte un mélange composite de poudres.

Le mélange composite résultant (7,5% massique) est ajouté, après pesée sous sorbonne et sous agitation, en même temps que des fibres de carbone VGCF (2,5% massique), dans un mélange préalablement préparé comprenant un liant organique (du polyfluorure de vinylidène) (4,5% en masse) et un solvant (du N-méthylpyrrolidone) (12,4 g).

Ensuite, le matériau actif $LiFePO_4$ (85,5% massique) est ajouté au mélange précédent puis est dispersé.

Le mélange final est ensuite déposé par enduction et séché.

EXEMPLE 3

Cet exemple illustre l'évaluation des performances électrochimiques des électrodes préparées à l'exemple comparatif 1 et aux exemples 1 et 2, ces électrodes pouvant être comparées du fait qu'elles présentent le même grammage.

Pour ce faire, chacune de ces électrodes est incorporée dans une pile bouton face à une contre-électrode en lithium métallique avec un électrolyte comprenant un mélange (carbonate d'éthylène/carbonate de diméthyle/carbonate d'éthyle et méthyle) (1/1/1) et un sel $LiPF_6$ (1M), chacune des piles boutons étant soumise au test suivant :

- lors d'un premier cycle, un cyclage entre 2 et 4,5 V à 20°C, en appliquant un courant correspondant à régime de C/10 jusqu'à 3,6 V puis à C/50 jusqu'à 4,5 V (avec 1 C correspondant à 155 mA/g d'électrode) ;
- lors d'un deuxième cycle, un cyclage réalisé à C/10 uniquement entre 2 et 3,6 V pour contrôler que la capacité du matériau actif $LiFePO_4$ a bien été récupérée.

Les résultats de ce test sont reportés sur la figure 1, qui illustre l'évolution du potentiel E (en V) en fonction de la capacité spécifique C (en mAh/g) de l'électrode positive, dans laquelle est introduit le sel, avec les courbes a à f faisant référence, respectivement, au premier cycle de la pile bouton avec l'électrode de l'exemple comparatif 1, au deuxième cycle de la pile bouton avec l'électrode comparatif 1, au premier cycle de la pile bouton avec l'électrode de l'exemple 1, au deuxième cycle de la pile bouton avec l'électrode de l'exemple 1, au premier cycle de la pile bouton avec l'électrode de l'exemple 2 et au deuxième cycle de la pile bouton avec l'électrode de l'exemple 2.

Ces courbes montrent bien une activité électrochimique entre 4 et 4,3 V correspondant à la décomposition du squarate de lithium.

Pour toutes les électrodes, le comportement électrochimique pour le deuxième cycle est similaire, attestant que le matériau $LiFePO_4$ fonctionne correctement à un régime de C/10 et à 20°C après décomposition du sel sacrificiel.

En revanche, il a été constaté, de manière positive, que les capacités spécifiques du sel sacrificiel entre 3,8 et 4,5 V lors du premier cycle sont plus importantes et les potentiels moyens de décomposition lors du premier cycle du sel sacrificiel sont moindres pour les piles comportant une électrode préparée conformément au procédé de l'invention, comme l'atteste le tableau de résultats ci-dessous.

| | Pile avec électrode de l'exemple comparatif 1 | Pile avec électrode de l'exemple 1 | Pile avec électrode de l'exemple 2 |
|---|---|---|---|
| Capacité spécifique (en mAh/g) | 360 | 470 | 428 |
| Potentiel moyen de décomposition (en mV) | 4227 | 4100 | 4185 |

Les capacités spécifiques indiquées dans ce tableau ont été obtenues de la manière suivante :

$$C= [(\text{Capacité de } 1^{\text{ère}} \text{ charge-Capacité spécifique pratique du } LiFePO_4)^* \text{ \% de } LiFePO_4]/\text{\% de sel.}$$

La capacité spécifique pratique du $LiFePO_4$ est fixée à 155 mAh/g.
Aussi, la mise en œuvre du procédé de l'invention pour fabriquer les électrodes avec mélange intime du sel sacrificiel et de l'additif conducteur électronique s'avère avantageuse, notamment pour le potentiel moyen de décomposition moindre, ce qui engendre une consommation d'énergie moindre et une préservation des autres composants de la batterie, tels que l'électrolyte.

EXEMPLE COMPARATIF 2

Le présent exemple illustre la préparation d'une électrode selon des modalités non conformes à l'invention.
Pour ce faire, une poudre d'oxalate de lithium (5% en masse) pesée sous sorbonne est introduite dans un mélange comprenant un liant PVDF (4,5% en masse) et de la N-méthyl-2-pyrrolidone, en tant que solvant. De manière concomitante, sont ajoutés des additifs conducteurs électroniques (5% en masse de carbone SuperP et VGCF). Le mélange résultant est ensuite agité, en vue d'obtenir une bonne dispersion.
Ensuite, le matériau actif $LiFePO_4$ (85,5% en masse) est ajouté au mélange précédent puis est dispersé.
Le mélange final est ensuite déposé par enduction et séché.

EXEMPLE 4

Le présent exemple illustre la préparation d'une électrode selon des modalités conformes au procédé de l'invention impliquant notamment une étape de co-broyage d'une poudre de conducteur électronique, qui est du noir de carbone et d'une poudre de sel sacrificiel, qui est de l'oxalate de lithium.
Une poudre d'oxalate de lithium (2 g) est mélangée avec du carbone Super P (1 g) et le mélange résultant est broyé dans un bol en agate de 50 mL avec 2 billes de 1 cm de diamètre pendant 4 heures.
Le mélange composite résultant (7,5% massique) est ajouté, après pesée sous sorbonne et sous agitation, en même temps que des fibres de carbone VGCF (2,5% massique), dans un mélange préalablement préparé comprenant un liant organique (du polyfluorure de vinylidène (4,5% massique) et un solvant (du N-méthylpyrrolidone) (14,6 g).
Ensuite, le matériau actif $LiFePO_4$ (85,5% massique) est ajouté au mélange précédent puis est dispersé.
Le mélange final est ensuite déposé par enduction et séché.

EXEMPLE 5

Le présent exemple illustre la préparation d'une électrode selon des modalités conformes au procédé de l'invention impliquant notamment une étape de préparation du mélange composite par dispersion des ingrédients dans une solution suivie d'un séchage.
Pour ce faire, une poudre d'oxalate de lithium obtenue (2 g) est dissoute dans 50 mL d'un mélange eau/éthanol (50/50) comprenant 50 mg de LiOH. Au mélange résultant est ajouté 1 g de carbone Super P.
Le mélange final est traité avec une sonde à ultrasons pendant 3*5 minutes puis évaporé à l'évaporateur rotatif, moyennant quoi il résulte un mélange composite de poudres.
Le mélange composite résultant (7,5% massique) est ajouté, après pesée sous sorbonne et sous agitation, en même temps que des fibres de carbone VGCF (2,5% massique), dans un mélange préalablement préparé comprenant un liant organique (du polyfluorure de vinylidène) (4,5% en masse) et un solvant (du N-méthylpyrrolidone) (14,6 g).
Ensuite, le matériau actif $LiFePO_4$ (85,5% massique) est ajouté au mélange précédent puis est dispersé.

Le mélange final est ensuite déposé par enduction et séché.

EXEMPLE 6

Cet exemple illustre l'évaluation des performances électrochimiques des électrodes préparées à l'exemple comparatif 2 et à l'exemple 5, ces électrodes pouvant être comparées du fait qu'elles présentent le même grammage.
Pour ce faire, chacune de ces électrodes est incorporée dans une pile bouton face à une contre-électrode en lithium métallique avec un électrolyte comprenant un mélange (carbonate d'éthylène/carbonate de diméthyle/carbonate d'éthyle et méthyle) (1/1/1) et un sel $LiPF_6$ (1M), chacune des piles boutons étant soumises au test suivant :

- lors d'un premier cycle, un cyclage en appliquant un courant correspondant à un régime de C/10 jusqu'à 5 V avec un maintien en potentiel jusqu'à C/50 ;
- lors d'un deuxième cycle, un cyclage réalisé à C/10 uniquement entre 2 et 3,6 V pour contrôler que la capacité du matériau actif $LiFePO_4$ a bien été récupérée.

Les résultats de ce test sont reportés sur la figure 2, qui illustre l'évolution du potentiel E (en V) en fonction de la capacité spécifique C (en mAh/g) du $LiFePO_4$ avec les courbes a à d faisant référence, respectivement, au premier cycle de la pile bouton avec l'électrode de l'exemple comparatif 2, au deuxième cycle de la pile bouton avec l'électrode comparatif 2, au premier cycle de la pile bouton avec l'électrode de l'exemple 5 et au deuxième cycle de la pile bouton avec l'électrode de l'exemple 5.
Pour le 1$^{er}$ cycle, la pile avec l'électrode de l'exemple comparatif 2 montre la même capacité en décharge que celle avec la pile avec l'électrode de l'exemple 5 mais une signature du $LiFePO_4$ moins importante en charge. Au deuxième cycle, elles ont les mêmes signatures.
Il a été constaté, de manière positive, un surplus de capacité spécifique apportée par le sel avec la pile comportant l'électrode de l'exemple 5, comme l'atteste le tableau de résultats ci-dessous.

| | Pile avec électrode de l'exemple comparatif 2 | Pile avec électrode de l'exemple 5 |
|---|---|---|
| Capacité spécifique (en mAh/g) | 221 | 340 |

L'oxalate de lithium incorporé par dissolution avec le carbone dispersé pour former un mélange composite avant la réalisation de l'électrode permet d'améliorer le rendement de décomposition de l'oxalate de 50%.

**Revendications**

1. Procédé de préparation d'une électrode pour accumulateur fonctionnant selon le principe d'insertion et désinsertion ionique et/ou selon le principe de formation d'un alliage, ladite électrode comprenant un matériau actif d'électrode comprenant les étapes suivantes :

   a) une étape de préparation d'un mélange de poudres comprenant au moins une poudre d'un additif conducteur électronique et au moins une poudre d'un sel, dont un des ions est celui intervenant dans le processus d'insertion ou désinsertion ionique et/ou de formation d'un alliage, ledit sel étant choisi parmi :

   - les azotures de formule $N_3A$, avec A correspondant à un cation lithium, sodium ou potassium ; les diazotures de formule $(N_3)_2A^1$ avec $A^1$ correspondant à un cation magnésium ou calcium ; les triazotures de formule $(N_3)_3A^2$ avec $A^2$ correspondant à un cation aluminium ;
   - les sels oxocarbonés répondant à l'une des formules (I) à (IV) suivantes :

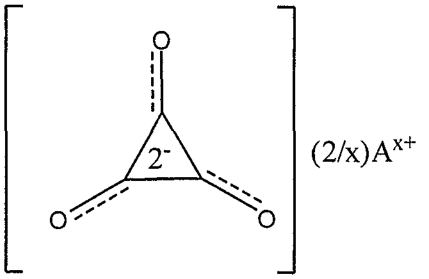

(I)

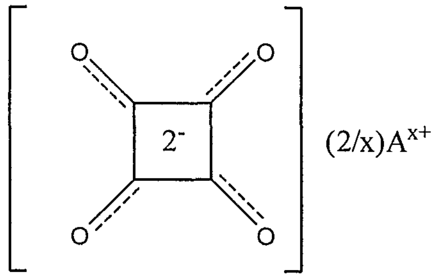

(II)

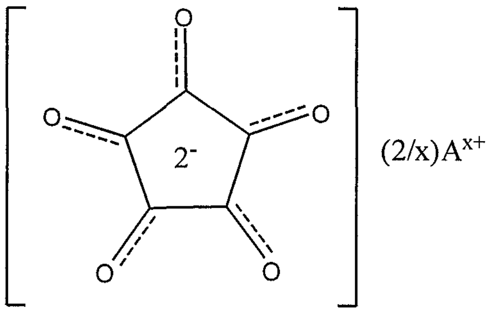

(III)

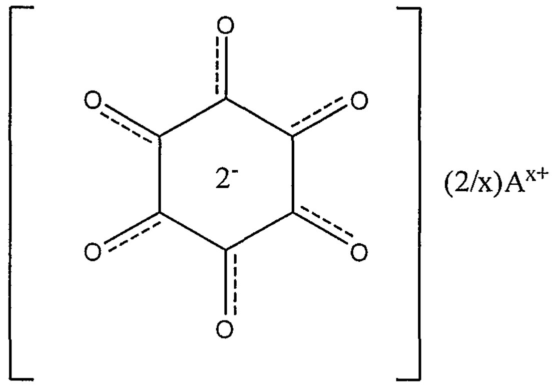

(IV)

les formules susmentionnées indiquant que deux charges négatives sont portées par deux atomes d'oxygène du cycle auxquels ils sont liés, les autres atomes d'oxygène étant liés par une double liaison au cycle, A correspondant à un cation lithium, sodium, potassium, calcium, magnésium ou aluminium et x correspondant au nombre de charges du cation ;

- les cétocarboxylates répondant aux formules (V) à (VII) suivantes :

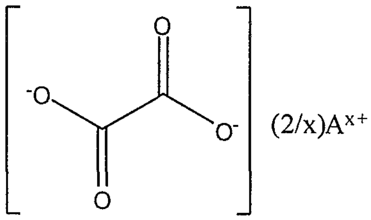

(V)

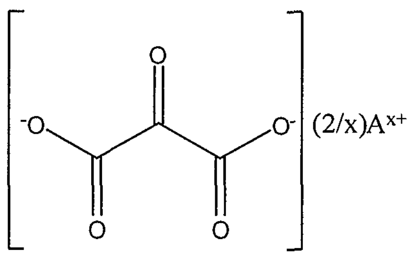

(VI)

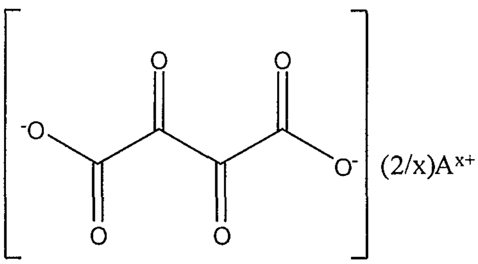

(VII)

avec A correspondant à un cation lithium, sodium, potassium, calcium, magnésium ou aluminium et x correspondant au nombre de charges du cation ;

- les hydrazides de lithium répondant aux formules (VIII) et (IX) suivantes :

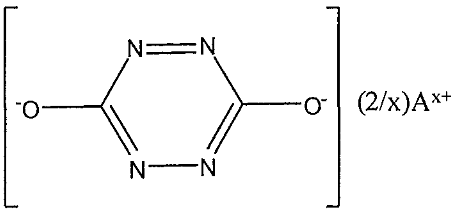

(VIII)

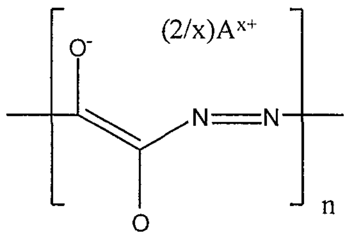

(IX)

avec A correspondant à un cation lithium, sodium, potassium, calcium, magnésium ou aluminium, x correspondant au nombre de charges du cation et n correspondant au nombre de répétition du motif pris entre crochets, ce nombre de répétition pouvant aller de 3 à 1000 ;

b) une étape de mise en contact du mélange de poudres de l'étape a) avec une suspension comprenant un solvant et ledit matériau actif de l'électrode ;

c) une étape de mise en forme et de séchage du mélange obtenu en b), moyennant quoi il résulte l'électrode pour accumulateur mentionnée en objet.

**2.** Procédé de préparation selon la revendication 1, dans lequel l'étape de préparation a) consiste à co-broyer, en milieu solide, au moins une poudre d'un additif conducteur électronique et au moins une poudre d'un sel.

**3.** Procédé de préparation selon la revendication 1, dans lequel l'étape a) consiste à mettre en œuvre les opérations suivantes :

i) une opération de mise en contact d'au moins une poudre d'un additif conducteur électronique et d'au moins une poudre d'un sel, dans une solution ;

ii) une opération de mélange de la solution obtenue en i) ; et

iii) une opération de séchage de la solution, jusqu'à obtention du mélange de poudres.

**4.** Procédé de réalisation selon l'une quelconque des revendications précédentes, dans lequel le sel est choisi parmi :

- l'azoture de lithium de formule $LiN_3$;
- le squarate de lithium de formule (X) suivante :

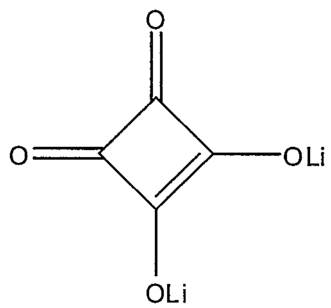

(X)

- l'oxalate de lithium de formule (XI) suivante :

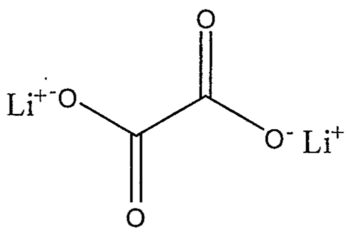

(XI)

5. Procédé selon l'une quelconque des revendications précédentes, dans lequel l'additif conducteur électronique est un matériau carboné.

6. Procédé selon l'une quelconque des revendications précédentes, dans lequel l'additif conducteur électronique est un matériau carboné choisi parmi le graphite, les billes de mésocarbone, les fibres de carbone, le noir de carbone, le graphène, les nanotubes de carbone et les mélanges de ceux-ci.

7. Procédé selon l'une quelconque des revendications précédentes, dans lequel l'additif conducteur électronique est du noir de carbone.

8. Procédé selon l'une quelconque des revendications précédentes, dans lequel, lorsque l'accumulateur est un accumulateur du type lithium-ion, le matériau actif de l'électrode est un matériau du type oxyde lithié comprenant au moins un élément métallique de transition, du type phosphate lithié comprenant au moins un élément métallique de transition, du type silicate lithié comprenant au moins un élément métallique de transition ou du type borate lithié comprenant au moins un élément métallique de transition.

9. Procédé selon l'une quelconque des revendications précédentes, dans lequel le solvant est un solvant organique.

10. Procédé selon l'une quelconque des revendications précédentes, dans lequel le solvant organique est choisi parmi les solvants polaires aprotiques.

11. Procédé selon l'une quelconque des revendications précédentes, dans lequel la suspension comprend un liant polymérique.

12. Procédé selon la revendication 11, dans lequel le liant polymérique est choisi parmi le polyfluorure de vinylidène, une carboxyméthylcellulose, un acide polyacrylique, un polyacrylate, un caoutchouc styrène-butadiène ou un latex acrylique.

13. Procédé selon l'une quelconque des revendications précédentes, dans lequel l'étape b) est réalisée par la succession d'opérations suivantes :

i) une opération d'ajout du mélange de poudres obtenu en a) dans un solvant organique, lequel est éventuellement, en mélange avec un liant polymérique ;
ii) une opération d'ajout, à la dispersion résultant de i), du matériau actif.

14. Procédé selon l'une quelconque des revendications précédentes, dans lequel l'électrode est une électrode positive.

## Patentansprüche

1. Verfahren zur Herstellung einer Elektrode für einen Akku, der gemäß dem Prinzip der Ioneneinlagerung und -auslagerung und/oder gemäß dem Prinzip der Legierungsbildung funktioniert, wobei die Elektrode ein aktives Elektrodenmaterial umfasst, umfassend die folgenden Schritte:

a) einen Schritt der Herstellung einer Mischung von Pulvern, umfassend wenigstens ein Pulver eines elektronisch leitenden Additivs und wenigstens ein Pulver eines Salzes, wovon eines der Ionen jenes ist, das in dem Verfahren der Ioneneinlagerung oder -auslagerung und/oder der Legierungsbildung vorkommt, wobei das Salz ausgewählt

ist aus Folgenden:

- den Aziden der Formel $N_3A$, wobei A einem Lithium-, Natrium- oder Kaliumkation entspricht; den Diaziden der Formel $(N_3)2A^1$, wobei $A^1$ einem Magnesium- oder Kalziumkation entspricht; den Triaziden der Formel $(N_3)_3A^2$, wobei $A^2$ einem Aluminiumkation entspricht;
- den Oxokohlenstoffsalzen, die einer der nachfolgenden Formeln (I) bis (IV) genügen:

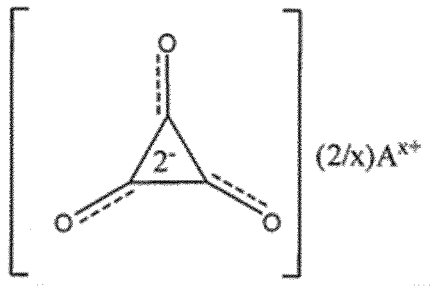

(I)

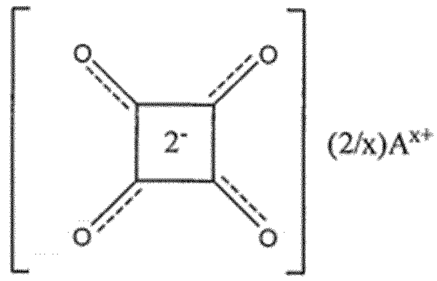

(II)

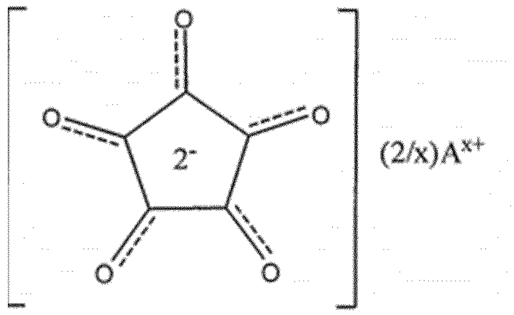

(III)

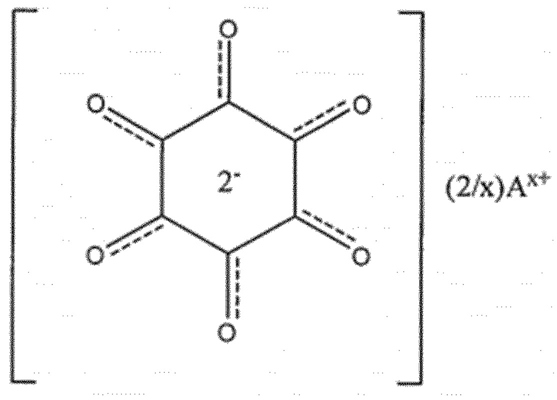

(IV)

wobei die vorstehend genannten Formeln angeben, dass zwei negative Ladungen getragen werden von zwei Sauerstoffatomen des Rings, mit dem sie verbunden sind, wobei die anderen Sauerstoffatome mittels einer Doppelbindung mit dem Ring verbunden sind, wobei A einem Lithium-, Natrium-, Kalium-, Kalzium-, Magnesium- oder Aluminiumkation entspricht, und wobei x der Zahl von Ladungen des Kations entspricht;
- den Ketocarboxylaten, die den nachfolgenden Formeln (V) bis (VII) genügen:

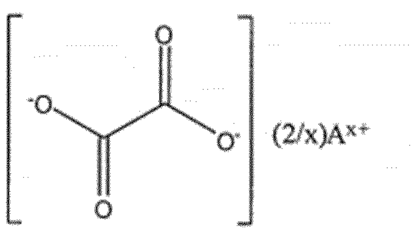

(V)

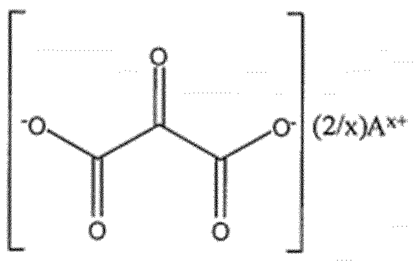

(VI)

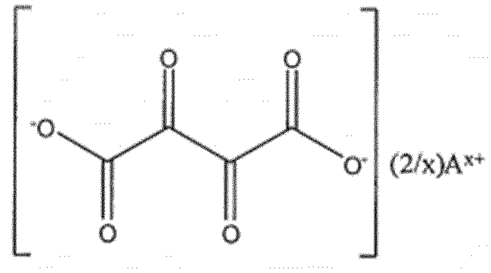

(VII)

wobei A einem Lithium-, Natrium-, Kalium-, Kalzium-, Magnesium- oder Aluminiumkation entspricht, und wobei x der Zahl von Ladungen des Kations entspricht;
- den Lithiumhydraziden, die den nachfolgenden Formeln (VIII) und (IX) genügen:

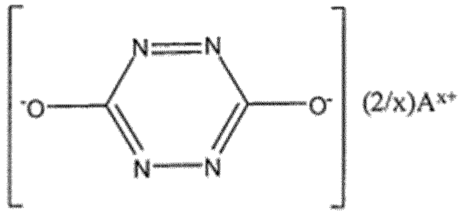

(VIII)

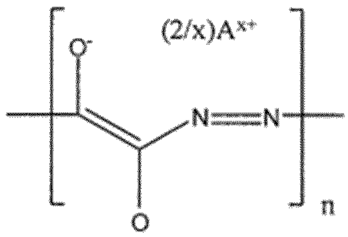

(IX)

wobei A einem Lithium-, Natrium-, Kalium-, Kalzium-, Magnesium- oder Aluminiumkation entspricht, wobei x der Zahl von Ladungen des Kations entspricht, und wobei n der Zahl von Wiederholungen des zwischen Klammern gesetzten Motivs entspricht, wobei diese Wiederholungszahl von 3 bis 1000 gehen kann;

b) einen Schritt des Inkontaktbringens der Mischung von Pulvern des Schritts a) mit einer Suspension, die ein Lösungsmittel und das aktive Elektrodenmaterial umfasst;
c) einen Schritt des Formens und des Trocknens der in b) erhaltenen Mischung, wodurch die genannte beabsichtigte Elektrode für einen Akku resultiert.

**2.** Herstellungsverfahren nach Anspruch 1, bei dem der Herstellungsschritt a) darin besteht, in fester Umgebung wenigstens ein Pulver eines elektronisch leitenden Additivs und wenigstens ein Pulver eines Salzes gemeinsam zu zerkleinern.

**3.** Herstellungsverfahren nach Anspruch 1, bei dem der Schritt a) darin besteht, die nachfolgenden Operationen durchzuführen:

i) eine Operation des Inkontaktbringens wenigstens eines Pulvers eines elektronisch leitenden Additivs und wenigstens eines Pulvers eines Salzes in einer Lösung;
ii) eine Operation des Mischens der in i) erhaltenen Lösung; und
iii) eine Operation des Trocknens der Lösung bis zum Erhalt der Mischung von Pulvern.

**4.** Herstellungsverfahren nach einem der vorhergehenden Ansprüche, bei dem das Salz ausgewählt ist aus Folgenden:

- dem Lithiumazid der Formel $LiN_3$;
- dem Lithiumsquarat der nachfolgenden Formel (X):

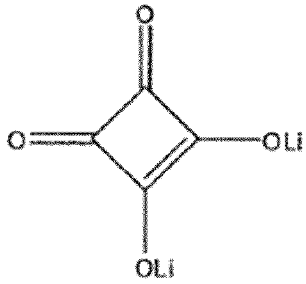

(X)

- dem Lithiumoxalat der nachfolgenden Formel (XI):

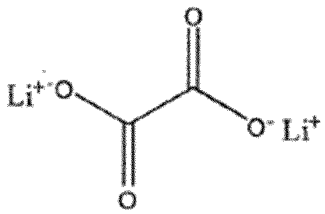

(XI)

**5.** Verfahren nach einem der vorhergehenden Ansprüche, bei dem das elektronisch leitende Additiv ein kohlenstoffhaltiges Material ist.

**6.** Verfahren nach einem der vorhergehenden Ansprüche, bei dem das elektronisch leitende Additiv ein kohlenstoffhaltiges Material ist, ausgewählt aus Graphit, Mesokarbonkügelchen, Karbonfasern, Kohlenstoffschwarz, Graphen, Kohlenstoffnanoröhrchen und deren Mischungen.

**7.** Verfahren nach einem der vorhergehenden Ansprüche, bei dem das elektronisch leitende Additiv Kohlenstoffschwarz ist.

**8.** Verfahren nach einem der vorhergehenden Ansprüche, bei dem dann, wenn der Akku ein Akku vom Typ Lithium-Ionen ist, das aktive Material der Elektrode ein Material vom Typ Lithiumoxid ist, umfassend wenigstens ein metallisches Übergangselement, vom Typ Lithiumphosphat, umfassend wenigstens ein metallisches Übergangselement, vom Typ Lithiumsilikat, umfassend wenigstens ein metallisches Übergangselement, oder vom Typ Lithiumborat, umfassend wenigstens ein metallisches Übergangselement.

**9.** Verfahren nach einem der vorhergehenden Ansprüche, bei dem das Lösungsmittel ein organisches Lösungsmittel ist.

**10.** Verfahren nach einem der vorhergehenden Ansprüche, bei dem das organische Lösungsmittel aus den polaren aprotischen Lösungsmitteln ausgewählt ist.

**11.** Verfahren nach einem der vorhergehenden Ansprüche, bei dem die Suspension einen Polymerbinder umfasst.

**12.** Verfahren nach Anspruch 11, bei dem der Polymerbinder ausgewählt ist aus Polyvinylidenfluorid, einer Carboxymethylzellulose, einer Polyacrylsäure, einem Polyacrylat, einem Styrol-Butadienkautschuk oder einem Acryllatex.

**13.** Verfahren nach einem der vorhergehenden Ansprüche, bei dem der Schritt b) durch die Abfolge der nachfolgenden Operationen realisiert wird:

i) eine Operation des Hinzufügens der in a) erhaltenen Mischung von Pulvern in ein organisches Lösungsmittel, das gegebenenfalls in Mischung mit einem Polymerbinder ist;
ii) eine Operation des Hinzufügens des aktiven Materials zu der aus i) resultierenden Dispersion.

**14.** Verfahren nach einem der vorhergehenden Ansprüche, bei dem die Elektrode eine positive Elektrode ist.

## Claims

1. Method for preparing an electrode for a battery operating on the principle of ion insertion and removal and/or on the principle of alloy formation, said electrode comprising an active electrode material comprising the following steps:

a) a step of preparing a powder mixture comprising at least one powder of an electron-conducting additive and at least one powder of a salt, one of the ions whereof is that which is involved in the ion insertion or removal process and/or alloy formation process, said salt being selected from:

- azides of the formula $N_3A$, where A corresponds to a lithium, sodium or potassium cation; diazides of the formula $(N_3)_2A^1$ where $A^1$ corresponds to a magnesium or calcium cation; triazides of the formula $(N_3)_3A^2$ where $A^2$ corresponds to an aluminium cation;
- oxocarbon salts satisfying one of the following formulae (I) to (IV):

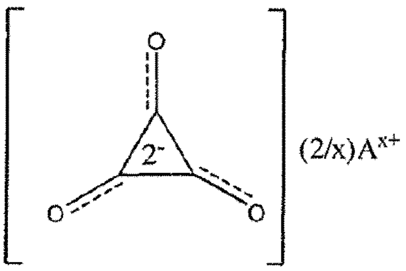

(I)

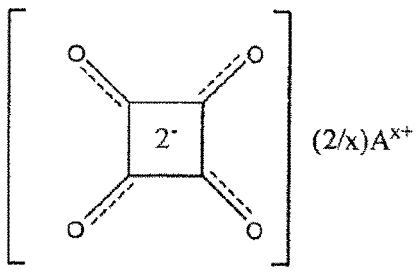

(II)

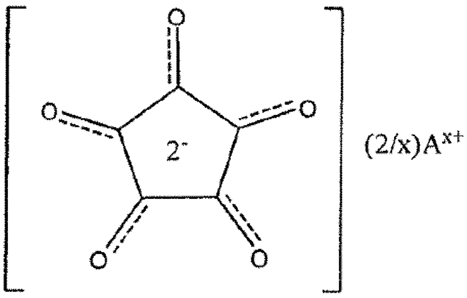

(III)

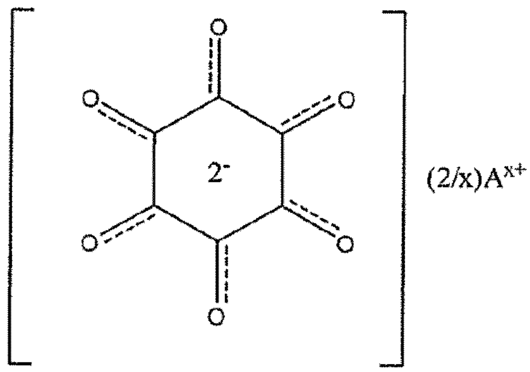

(IV)

the aforementioned formulae showing that two negative charges are carried by two oxygen atoms of the cycle to which they are bonded, the other oxygen atoms being bonded by a double bond to the cycle, A corresponding to a lithium, sodium, potassium, calcium, magnesium or aluminium cation and x corresponding to the number of charges of the cation;
- ketocarboxylates satisfying the following formulae (V) to (VII):

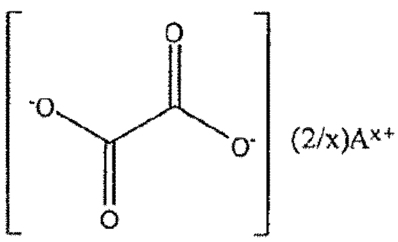

(V)

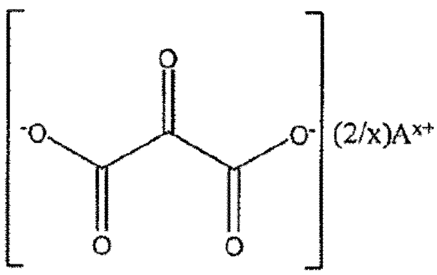

(VI)

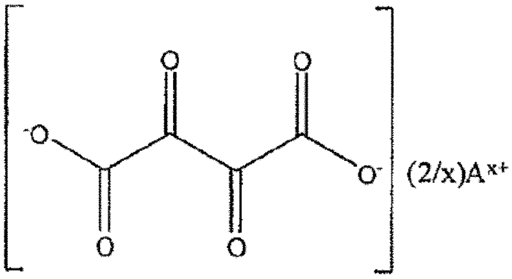

(VII)

where A corresponds to a lithium, sodium, potassium, calcium, magnesium or aluminium cation and x corresponds to the number of charges of the cation;

- lithium hydrazides satisfying the following formulae (VIII) and (IX):

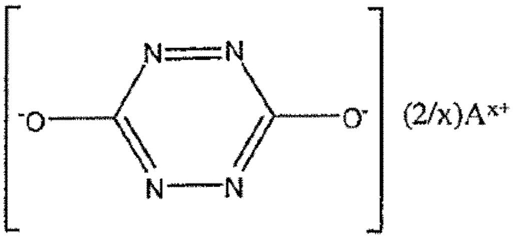

(VIII)

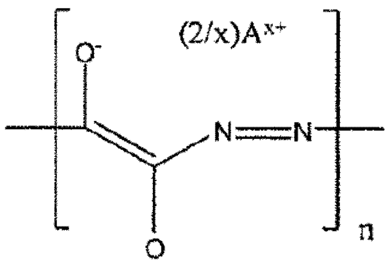

(IX)

where A corresponds to a lithium, sodium, potassium, calcium, magnesium or aluminium cation, x corresponds to the number of charges of the cation, and n corresponds to the number of occurrences of the unit taken between square brackets, this number of occurrences ranging from 3 to 1,000;

b) a step of placing the powder mixture from step a) in contact with a suspension comprising a solvent and said active electrode material;

c) a step of forming and drying the mixture obtained in b), whereby obtaining the electrode for a battery stipulated in the subject matter.

**2.** Preparation method according to claim 1, wherein the preparation step a) consists of co-grinding, in a solid medium, at least one powder of an electron-conducting additive and at least one powder of a salt.

**3.** Preparation method according to claim 1, wherein step a) consists of implementing the following operations:

I) an operation for placing at least one powder of an electron-conducting additive in contact with at least one powder of a salt, in a solution;

ii) an operation for mixing the solution obtained in i); and

iii) an operation for drying the solution until the powder mixture is obtained.

**4.** Production method according to any of the preceding claims, wherein the salt is selected from:

- lithium azide of the formula $LiN_3$;
- lithium squarate of the following formula (X):

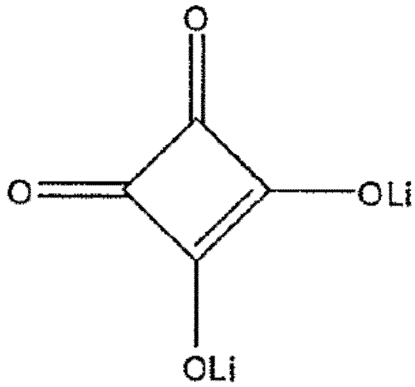

(X)

- lithium oxalate of the following formula (XI):

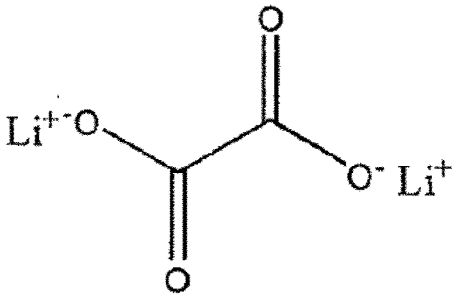

(XI)

**5.** Method according to any of the preceding claims, wherein the electron-conducting additive is a carbonaceous material.

**6.** Method according to any of the preceding claims, wherein the electron-conducting additive is a carbonaceous material selected from graphite, mesocarbon beads, carbon fibres, carbon black, graphene, carbon nanotubes and mixtures thereof.

**7.** Method according to any of the preceding claims, wherein the electron-conducting additive is carbon black.

**8.** Method according to any of the preceding claims, wherein, when the battery is a lithium-ion type battery, the active electrode material is a material of the lithium oxide type comprising at least one transition metal, of the lithium phosphate type comprising at least one transition metal, of the lithium silicate type comprising at least one transition metal, or of the lithium borate type comprising at least one transition metal.

**9.** Method according to any of the preceding claims, wherein the solvent is an organic solvent.

**10.** Method according to any of the preceding claims, wherein the organic solvent is selected from polar aprotic solvents.

**11.** Method according to any of the preceding claims, wherein the suspension comprises a polymer binder.

**12.** Method according to claim 11, wherein the polymer binder is selected from polyvinylidene fluoride, a carboxymethyl cellulose, a polyacrylic acid, a polyacrylate, a styrene-butadiene rubber or an acrylic latex.

**13.** Method according to any of the preceding claims, wherein step b) is carried out by the following successive operations:

i) an operation for adding the powder mixture obtained in a) to an organic solvent, which is potentially mixed with a polymer binder;

ii) an operation for adding the active material to the dispersion obtained in i).

**14.** Method according to any of the preceding claims, wherein the electrode is a positive electrode.

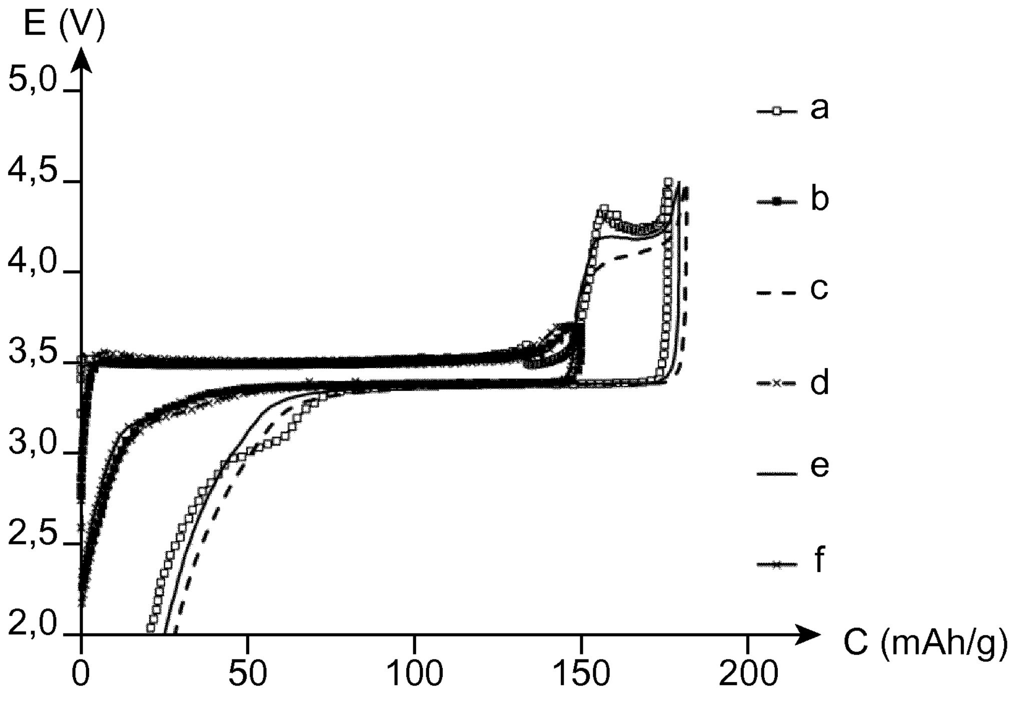
E (V)
5,0
4,5
4,0
3,5
3,0
2,5
2,0
0
50
100
150
200
C (mAh/g)
a
b
c
d
e
f

FIG. 1

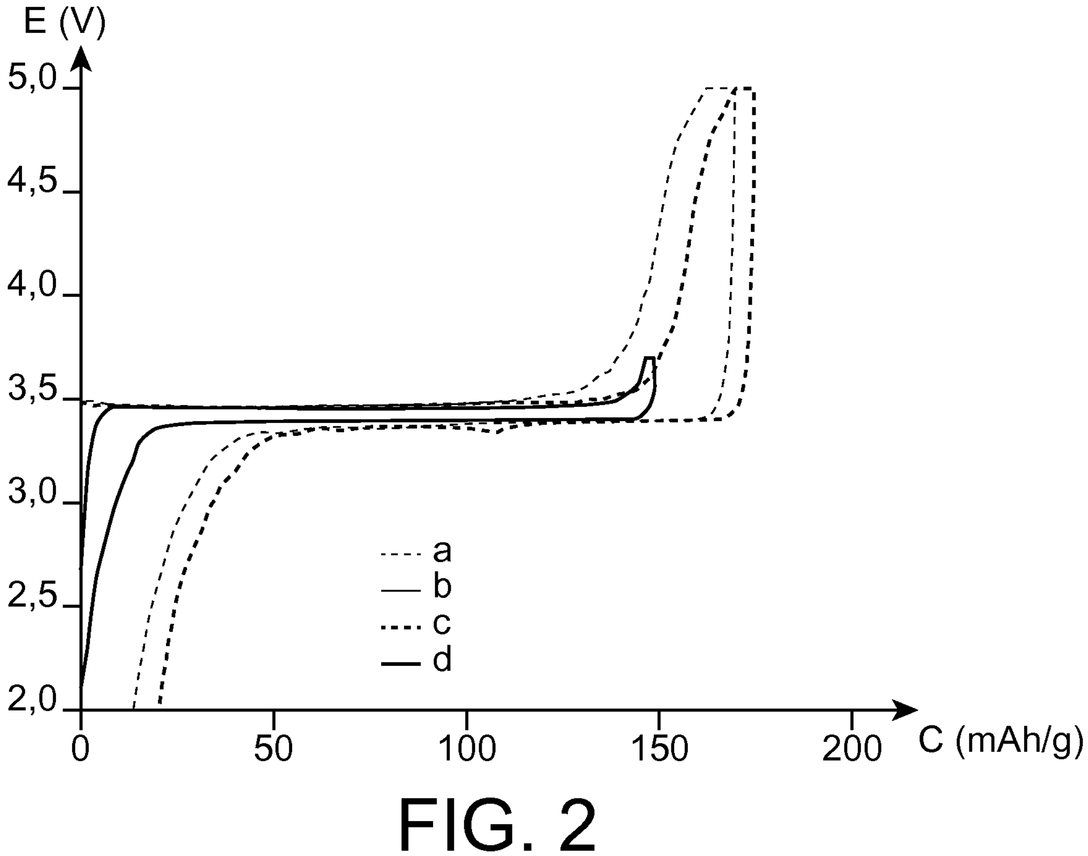
E (V)
5,0
4,5
4,0
3,5
3,0
2,5
2,0
0
50
100
150
200
C (mAh/g)
a
b
c
d

FIG. 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 1997031401 A
- FR 2961634
- CN 104037418


### Littérature non-brevet citée dans la description


- *Electrochemistry Communications,* 2011, vol. 13, 664-667